(19) **Europäisches Patentamt European Patent Office Office européen des brevets**

(11) **EP 4 597 901 A1**

(12) **EUROPEAN PATENT APPLICATION**
published in accordance with Art. 153(4) EPC

(43) Date of publication:
**06.08.2025 Bulletin 2025/32**

(21) Application number: **23872920.6**

(22) Date of filing: **19.09.2023**

(51) International Patent Classification (IPC):
*H04L 5/00* (2006.01)          *H04W 72/23* (2023.01)

(52) Cooperative Patent Classification (CPC):
**H04L 5/00; H04W 72/23**

(86) International application number:
**PCT/KR2023/014189**

(87) International publication number:
**WO 2024/071802 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 KR 20220121991**

(71) Applicant: **LG Electronics Inc.**
**Yeongdeungpo-gu**
**Seoul 07336 (KR)**

(72) Inventors:
• **KIM, Hyungtae**
  **Seoul 06772 (KR)**
• **KANG, Jiwon**
  **Seoul 06772 (KR)**
• **PARK, Haewook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR PERFORMING UPLINK TRANSMISSION AND RECEPTION IN COMMUNICATION SYSTEM**

(57)     Disclosed are a method and device for performing uplink transmission and reception in a communication system. The method performed by a terminal in a wireless communication system according to an embodiment disclosed herein comprises the steps of: receiving information about the configuration of an SRS resource set; receiving DCI including a first PTRS-DMRS port association field and a second PTRS-DMRS port association field; and transmitting a PTRS on the basis of at least one of the first PTRS-DMRS port association field or the second PTRS-DMRS port association field. Here, on the basis that three PTRS ports are configured for the terminal, the first PTRS-DMRS port association field may indicate information about one DMRS port associated with one PTRS port and the second PTRS-DMRS port association field may indicate information about two DMRS ports associated with two PTRS ports.

FIG.8

START

Receive information for configuration of SRS resource set — S810

Receive DCI including first PTRS-DMRS association field and second PTRS-DMRS association field — S820

Transmit PTRS based on at least one of first PTRS-DMRS port association field or the second PTRS-DMRS port association field — S830

END

**Description**

[TECHNICAL FIELD]

The present disclosure relates to a wireless communication system, and more specifically, to a method and device for performing uplink transmission and reception in a wireless communication system.

[BACKGROUND ART]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and device for performing uplink transmission and reception in a wireless communication system.

In addition, the additional technical object of the present disclosure is to provide a method and device for configuring/indicating phase tracking reference signal-demodulation reference signal (PTRS-DMRS) port association in relation to uplink transmission and reception in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: receiving information for configuration of a sounding reference signal (SRS) resource set; receiving downlink control information (DCI) including a first Phase tracking reference signal-demodulation reference signal (PTSR-DMRS) port association field and a second PTRS-DMRS port association field; and transmitting a PTRS based on at least one of the first PTRS-DMRS port association field or the second PTRS-DMRS port association field. Herein, based on three PTRS ports being configured for the UE, the first PTRS-DMRS port association field may indicate information for one DMRS port associated with one PTRS port, and the second PTRS-DMRS port association field indicates information for two DMRS ports associated with two PTRS ports. Field sizes for the first PTRS-DMRS port association field and the second PTRS-DMRS port association field may be determined based on a number of specific SRS resources belonging to the SRS resource set.

A method performed by a base station in a wireless communication system according to an additional aspect of the present disclosure may comprise: transmitting information for configuration of a sounding reference signal (SRS) resource set; transmitting downlink control information (DCI) including a first Phase tracking reference signal-demodulation reference signal (PTSR-DMRS) port association field and a second PTRS-DMRS port association field; and receiving a PTRS based on at least one of the first PTRS-DMRS port association field or the second PTRS-DMRS port association field. Herein, based on three PTRS ports being configured for the UE, the first PTRS-DMRS port association field may indicate information for one DMRS port associated with one PTRS port, and the second PTRS-DMRS port association field indicates information for two DMRS ports associated with two PTRS ports. Field sizes for the first PTRS-DMRS port association field and the second PTRS-DMRS port association field may be determined based on a number of specific SRS resources belonging to the SRS resource set.

[Technical Effects]

According to an embodiment of the present disclosure, a method and device for performing uplink transmission and reception in a wireless communication system may be provided.

According to an embodiment of the present disclosure, a method and device for configuring/indicating phase tracking reference signal-demodulation reference signal (PTRS-DMRS) port association in relation to uplink transmission and reception in a wireless communication system may be provided.

According to an embodiment of the present disclosure, even when the number of PTRS ports that may be configured to a UE increases for performance improvement, PTRS-DMRS port association may be efficiently indicated by utilizing a specific number of indication fields.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a multiple Transmission and Reception Point (TRP) transmission scheme in a wireless communication system to which the present disclosure may be applied.
FIG. 8 is a diagram illustrating an operation of a user equipment for a method of performing PTRS transmission and reception according to an embodiment of the present disclosure.
FIG. 9 is a diagram illustrating an operation of a base station for a method of performing PTRS transmission and reception according to an embodiment of the present disclosure.
FIG. 10 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal

DMRS: demodulation reference signal

FDM: frequency division multiplexing

FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

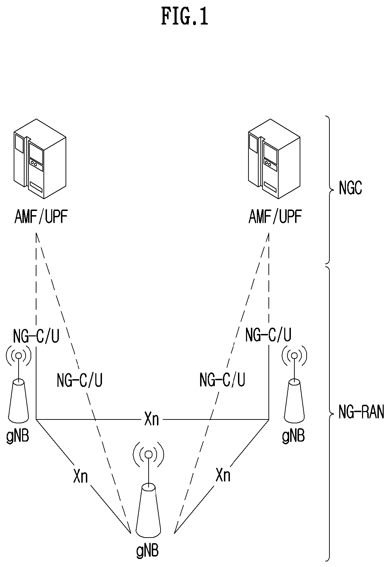

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

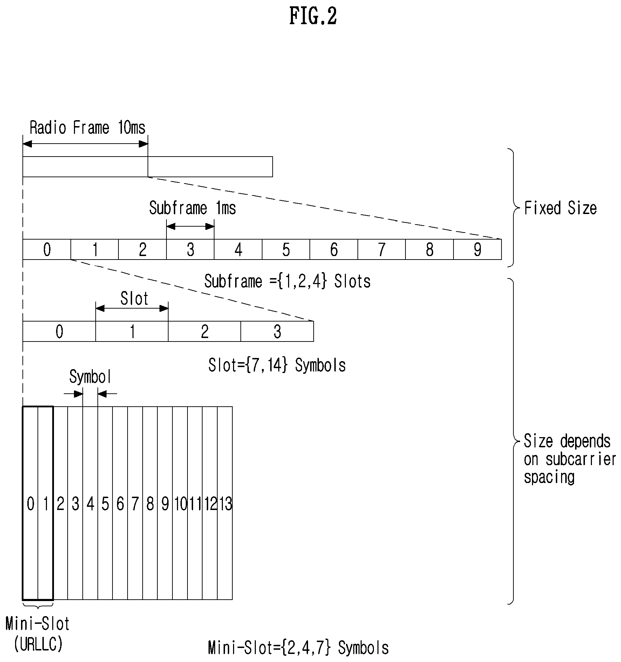

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, μ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - | 60, 120, 240kHz |
| | 52600MHz | |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

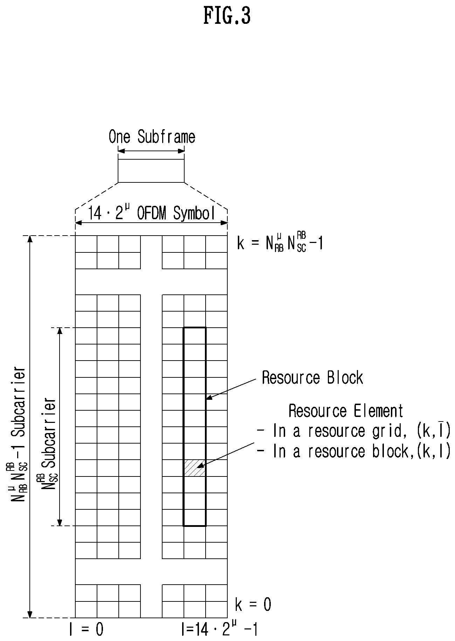

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14.2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and l'=0,...,$2^{\mu}N_{symb}^{(\mu)}-1$ refers to a position of a symbol in a subframe. When referring to a resource element in a slot, an index pair (k,l) is used. Here, l=0,...,$N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}{}^{start,\mu}$ is a common resource block that a BWP starts relatively to common resource block 0.

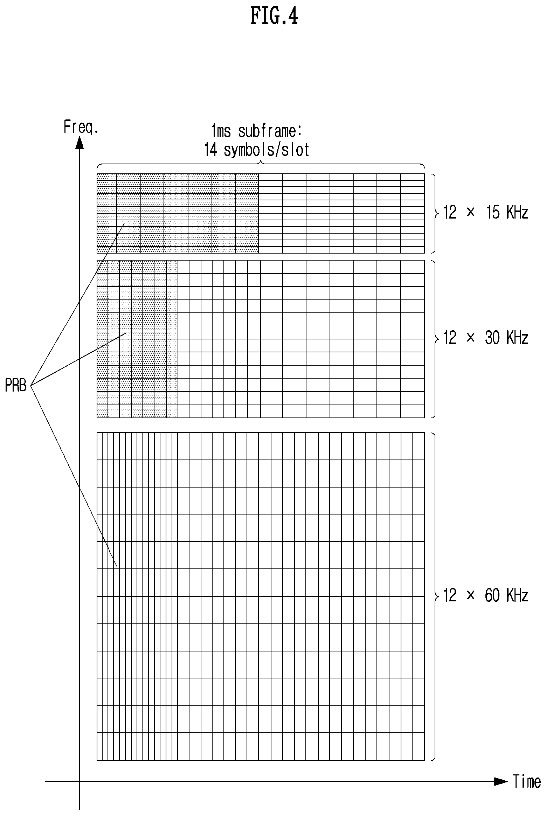

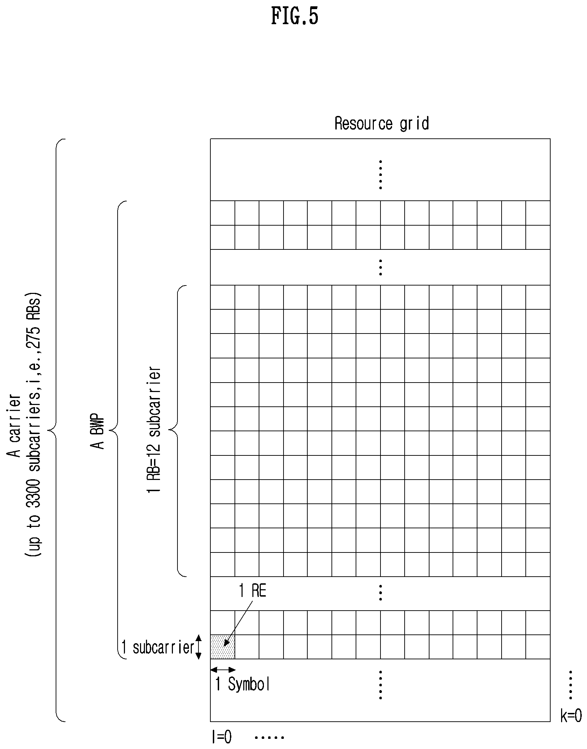

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

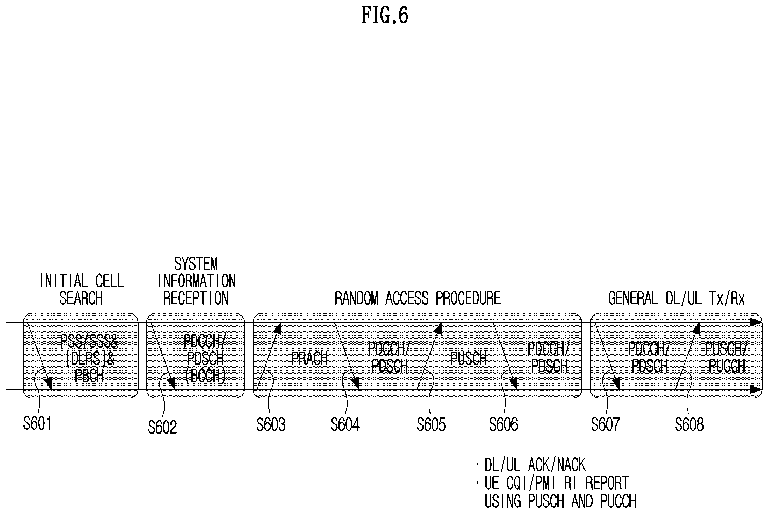

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subframe,\mu}+1$. After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a "Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

For a periodic CSI-RS resource of configured NZP-CSI-RS-ResourceSet including a higher layer parameter trs-Info, UE may expect a TCI state to indicate one of the following QCL type(s).

- QCL-TypeC with a SS/PBCH block, and if applicable, QCL-TypeD with the same SS/PBCH block, or
- QCL-TypeC with a SS/PBCH block, and if applicable, QCL-TypeD with a CSI-RS resource in configured NZP-CSI-RS-ResourceSet including a higher layer parameter repetition

For an aperiodic CSI-RS resource of configured NZP-CSI-RS-ResourceSet including a higher layer parameter trs-Info, UE may expect a TCI state to indicate QCL-TypeA with a periodic CSI-RS resource of NZP-CSI-RS-ResourceSet including a higher layer parameter trs-Info, and if applicable, QCL-TypeD with the same periodic CSI-RS resource.

*For a CSI-RS resource of NZP-CSI-RS-ResourceSet configured without a higher layer parameter trs-Info and without a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a SS/PBCH block, or

QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or when QCL-TypeD is not applicable, QCL-TypeB with a CSI-RS resource in configured NZP-CSI-RS-ResourceSet including a higher layer parameter trs-Info.

For a CSI-RS resource of configured NZP-CSI-RS-ResourceSet including a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or

QCL-TypeC with a SS/PBCH block, and if applicable, QCL-TypeD with the same SS/PBCH block.

For a DMRS of a PDCCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or

QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

For a DMRS of a PDSCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
- QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

Multiple TRP (M-TRP) related operation

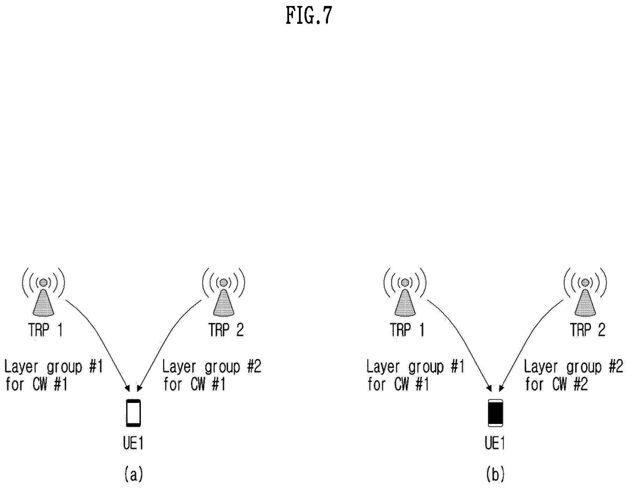

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be extended and applied to a frequency division multiplexing (FDM) method based on different frequency domain resources (e.g., RB/PRB (set), etc.) and/or a time division multiplexing (TDM) method based on different time domain resources (e.g., slots, symbols, sub-symbols, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a.

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.
In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.

The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).
- A RV/TCI may be the same or different at a different transmission time (occasion).

Downlink multiple TRP (M-TRP) URLLC transmission operation

DL MTRP URLLC transmission method means that multiple TRPs transmit the same data/DCI by using a different space(e.g., layer, port)/time/frequency resource. For example, TRP 1 transmits the specific data/DCI in resource 1 and TRP 2 transmits the specific data/DCI(i.e., same data/DCI) in resource 2

UE configured with a DL MTRP-URLLC transmission method receives the same data/DCI by using a different layer/time/frequency resource. Here, UE tmay receive an indication of the QCL RS/type (i.e., DL TCI state) used in the space/time/frequency resource for receiving the corresponding data/DCI from the base station.

For example, when the data/DCI is received in resource 1 and resource 2, a DL TCI state used in resource 1 and a DL TCI state used in resource 2 may be indicated. UE may achieve high reliability because it receives the data/DCI through resource 1 and resource 2. Such DL MTRP URLLC may be applied to a PDSCH/a PDCCH.

UL MTRP-URLLC transmission method means that multiple TRPs receive the same data/UCI from any UE by using a different space/time/frequency resource. For example, TRP 1 may receive the same data/DCI from UE in resource 1 and TRP 2 may receive the same data/DCI from UE in resource 2. And, TRP 1 and TRP 2 may share data/UCI received from the UE through a backhaul link (connected between TRPs).

That is, UE configured with a UL MTRP-URLLC transmission method may transmit the same data/UCI by using a different space/time/frequency resource. Here, the UE may be indicated by the base station for a Tx beam and Tx power (i.e., UL TCI state) to be used in space/time/frequency resources for transmitting the same data/UCI. For example, when the same data/UCI is transmitted in resource 1 and resource 2, the UE may be indicated by the base station to indicate the UL TCI state used in resource 1 and the UL TCI state used in resource 2 from the base station. This UL M-TRP URLLC may be applied to PUSCH/PUCCH.

In addition, in describing the present disclosure, when receiving/transmitting data/DCI/UCI through a specific space/time/frequency resource, using (or mapping) a specific TCI state(or TCI) may mean that, for DL, estimating a channel from the DMRS using the QCL type and QCL RS indicated by a specific TCI state in a specific space/time/frequency resource, and receiving/demodulating data/DCI/UCI with the estimated channel.

In addition, when receiving/transmitting data/DCI/UCI through a specific space/time/frequency resource, using (or mapping) a specific TCI state (or, TCI) may mean that, for UL, DMRS and data/UCI are transmitted/modulated using a Tx beam and/or Tx power indicated by a specific TCI state in a specific space/time/frequency resource.

And, the UL TCI state may include Tx beam or Tx power information of the UE. In addition, the base station may configure spatial relation information or the like for the UE through other parameters instead of the TCI state.

For example, the UL TCI state may be directly indicated to the UE through a UL grant DCI. Alternatively, the UL TCI state may mean spatial relationship information of an SRS resource indicated through an SRS resource indicator (SRI) field of a UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (maximum 32 parameter values set per cell), $q\_d$ (index of DL RS resources for PL (path loss) measurement (up to 4 measurements per cell), or/and I(closed loop power control process index (up to 2 processes per cell)).

As another embodiment of the present disclosure, the M-TRP eMBB transmission method refers to a method in which M-TRP transmits different data/DCI using different space/time/frequency resources. If the M-TRP eMBB transmission method is configured, it may be assumed that the UE receives a plurality of TCI states from the base station through DCI, and that data received using QCL RSs indicated by each of the plurality of TCI states are different from each other.

In addition, since the RNTI for M-TRP URLLC and the M-TRP eMBB RNTI are separately used, the UE may determine whether a specific transmission/reception is M-TRP URLLC transmission/reception or M-TRP eMBB transmission/reception. For example, when RNTI for URLLC is used and CRC masking is performed for DCI, the UE may determine the corresponding transmission as URLLC transmission. In addition, when the RNTI for eMBB is used and CRC masking is performed for DCI, the UE may determine the corresponding transmission as eMBB transmission. As another example, the base station may configure the M-TRP URLLC transmission/reception method or the M-TRP eMBB transmission/reception method to the UE through new signaling.

For convenience of description of the present disclosure, it has been assumed that 2 TRPs cooperate with each other to perform a transmission/reception operation, but the present disclosure is not limited thereto. That is, the present disclosure may be extended and applied even in a multi-TRP environment of 3 or more, and may be extended and applied even in an environment in which transmission/reception is performed in different panels or beams in the same TRP. The UE may recognize different TRPs as different TCI states. That the UE transmits/receives data/DCI/UCI using TCI state 1 means that it transmits/receives data/DCI/UCI/ from TRP 1 (or to TRP 1).

The present disclosure may be utilized in a situation in which the M-TRP cooperatively transmits the PDCCH (repetitively transmits or divides the same PDCCH). In addition, the present disclosure may be utilized in a situation in which M-TRP cooperatively transmits PDSCH or cooperatively receives PUSCH/PUCCH.

In addition, in describing the present disclosure, repeatedly transmitting the same PDCCH by a plurality of base stations (M-TRP) may mean transmitting the same DCI through a plurality of PDCCH candidates and has the same meaning that multiple base stations repeatedly transmit the same DCI. Here, two DCIs having the same DCI format/size/payload may be viewed as the same DCI.

Alternatively, if the scheduling results are the same even if the payloads of the two DCIs are different, the two DCIs may be regarded as the same DCI. For example, the time domain resource allocation (TDRA) field of DCI may relatively determine the slot/symbol position of data and the slot/symbol position of A(ACK)/N(NACK) based on the reception time of the DCI.

In this case, when the DCI received at time n and the DCI received at time n+1 indicate the same scheduling result to the UE, the TDRA fields of the two DCIs are different, and as a result, the DCI payload is different from each other. Accordingly, even if the payloads of the two DCIs are different, if the scheduling results are the same, the two DCIs may be regarded as the same DCI. Here, the number of repetitions R may be directly indicated by the base station to the UE or mutually promised.

Alternatively, even if the payloads of the two DCIs are different and the scheduling results are not the same, when the scheduling result of one DCI is a subset of the scheduling result of the other DCI, the two DCIs may be regarded as the same DCI.

For example, if the same data is TDM and repeatedly transmitted N times, DCI 1 received before the first data indicates (or schedules) repetition of data N times, and DCI 2 received before the second data indicates repetition (scheduling) of data N-1. In this case, the scheduling result (or data) of DCI 2 becomes a subset of the scheduling result (or data) of DCI 1, and both DCIs have scheduling results for the same data. Accordingly, even in this case, the two DCIs may be regarded as the same DCI.

And, in describing the present disclosure, dividing and transmitting the same PDCCH by a plurality of base stations may mean that one DCI is transmitted through one PDCCH candidate, but TRP 1 transmits some resources defined for the corresponding PDCCH candidate and TRP 2 transmits the remaining resources.

For example, when TRP 1 and TRP 2 divide and transmit PDCCH candidates corresponding to aggregation level m1 + m2, a PDCCH candidate may be divided into PDCCH candidate 1 corresponding to aggregation level m1 and PDCCH candidate 2 corresponding to aggregation level m2, TRP 1 may transmit PDCCH candidate 1, and TPR 2 may transmit PDCCH candidate 2. In this case, TRP 1 and TRP 2 may transmit PDCCH candidate 1 and PDCCH candidate 2 using different time/frequency resources. After receiving the PDCCH candidate 1 and the PDCCH candidate 2, the UE may generate a PDCCH candidate corresponding to the aggregation level m1+m2 and attempt DCI decoding.

In this case, the method in which the same DCI is divided and transmitted to several PDCCH candidates may be implemented in the following two methods.

The first method is a method in which DCI payload (e.g., control information + CRC) is encoded through one channel encoder (e.g., polar encoder) and divided into two TRPs and transmitted. That is, the first method means a method of dividing and transmitting the coded bits obtained according to the encoding result in two TRPs. Here, the entire DCI payload may be encoded in the coded bit transmitted by each TRP, but is not limited thereto, and only some DCI payloads may be encoded.

The second method divides the DCI payload (e.g., control information + CRC) into two DCIs (DCI 1 and DCI 2) and encodes each of them through a channel encoder (e.g., a polar encoder). Thereafter, each of the two TRPs may transmit a coded bit corresponding to DCI 1 and a coded bit corresponding to DCI 2 to the terminal.

That is, dividing/repeating the same PDCCH by a plurality of base stations (M-TRP) and transmitting over a plurality of monitoring occasions (MOs) may mean that 1) the coded bit encoding the entire DCI content of the corresponding PDCCH is repeatedly transmitted through each MO for each base station (S-TRP), 2) the coded bit encoding the entire DCI content of the corresponding PDCCH is divided into a plurality of parts, and each base station (S-TRP) transmits different parts through each MO, or 3) the DCI content of the corresponding PDCCH is divided into a plurality of parts, and different parts are encoded for each base station (S-TRP) (that is, separately encoded) and transmitted through each MO.

Repeatedly/split transmission of the PDCCH may be understood as transmitting the PDCCH multiple times over several transmission occasions (TO).

Here, TO may mean a specific time and/or frequency resource unit in which the PDCCH is transmitted. For example, when the PDCCH is transmitted multiple times (to a specific RB) over slots 1, 2, 3, and 4, TO may mean each slot. As another example, if the PDCCH is transmitted multiple times (in a specific slot) over RB sets 1, 2, 3, and 4, TO may mean each RB set. As another example, if the PDCCH is transmitted multiple times over different times and frequencies, TO may mean each time/frequency resource. In addition, the TCI state used for DMRS channel estimation may be set differently for each TO, and it may be assumed that the TOs in which the TCI state is set differently are transmitted by different TRPs/panels.

Repeatedly transmitting or dividing the PDCCH by a plurality of base stations may mean that the PDCCH is transmitted over multiple TOs, and the union of the TCI states configured in the corresponding TOs consists of two or more TCI states. For example, PDCCH transmitting over TO 1,2,3,4 may mean that TCI states 1,2,3,4 are configured in each of TO 1,2,3,4 and TRP i cooperatively transmits the PDCCH in TO i.

In describing the present disclosure, repeatedly transmitting the same PUSCH to a plurality of base stations (i.e., M-TRP) by the UE may mean that the UE transmits the same data through a plurality of PUSCHs, and each PUSCH may be transmitted by being optimized for UL channels of different TRPs.

For example, the UE may repeatedly transmit the same data through PUSCH 1 and PUSCH 2. In this case, PUSCH 1 may be transmitted using UL TCI state 1 for TRP 1, and link adaptation such as precoder/MCS may also be scheduled to receive a value optimized for the channel of TRP 1 to transmit the PUSCH. PUSCH 2 is transmitted using UL TCI state 2 for TRP 2, and link adaptation such as a precoder/MCS may also be scheduled for a value optimized for the channel of TRP 2 to transmit the PUSCH. In this case, the repeatedly transmitted PUSCH 1 and PUSCH 2 may be transmitted at different times to be TDM, FDM, or SDM.

In addition, in describing the present disclosure, transmitting, by UE to a plurality of base stations (i.e., M-TRP), the same PUSCH by dividing it may mean that one data is transmitted through one PUSCH, but the resources allocated to the PUSCH are divided and optimized for UL channels of different TRPs for transmission.

For example, the UE may transmit the same data through a 10-symbol PUSCH. At this time, the first 5 symbols among 10 symbols may be transmitted using UL TCI state 1 for TRP 1, and the UE may transmit a 5-symbol PUSCH (to TRP 1) by receiving a link adaptation such as precoder/MCS and scheduling a value optimized for a channel of TRP 1. The remaining 5 symbols may be transmitted using UL TCI state 2 for TRP 2, and the UE may transmit the remaining 5-symbol PUSCH (with TRP 2) by receiving a link adaptation such as precoder/MCS and scheduling a value optimized for the channel of TRP 2.

In the above example, a method of dividing one PUSCH into time resources and performing TDM transmission for TRP 1 and TRP 2 has been described. However, the present disclosure is not limited thereto, and the UE may divide and transmit the same PUSCH to a plurality of base stations by using the FDM/SDM method.

The UE may repeatedly transmit the PUCCH to a plurality of base stations (similar to PUSCH transmission) or divide and transmit the same PUCCH.

And, when a plurality of TOs are indicated for the terminal in order to repeatedly transmit PDCCH/PDSCH/PUSCH/PUCCH or divide and transmit PDCCH/PDSCH/PUSCH/PUCCH, for each TO, UL may be transmitted toward a specific TRP, or DL may be received from a specific TRP. At this time, the UL TO (or the TO of TRP 1) transmitted toward TRP 1 may mean a TO using a first value of two spatial relations, two UL TCIs, two UL power control parameters or two pathloss (PL)-RS indicated to the terminal. And, UL TO (or TO of TRP 2) transmitted toward TRP 2 may mean a TO using a second value of two spatial relations, two UL TCIs, two UL power control parameters, or two PL-RSs indicated to the UE.

Similarly, in the case of DL transmission, the DL TO transmitted by TRP 1 (or TO of TRP 1) may mean a TO using a first value of two DL TCI states indicated to the terminal (e.g., when two TCI states are set in CORESET), and the DL TO transmitted by TRP 2 (or TO of TRP 2) may mean a TO using a second value of two DL TCI states indicated to the terminal (e.g., two TCI states are set in CORESET).

The present disclosure may be extended and applied to various channels such as PUSCH/PUCCH/PDSCH/PDCCH. In addition, the present disclosure may be extended and applied to both the case of repeatedly transmitting the channel and the case of dividing and transmitting the channel in different space/time/frequency resources.

In addition, in terms of the DCI transmission, the M-TRP transmission scheme may be devided into i) a multiple DCI (M-DCI)-based M-TRP transmission scheme in which each TRP transmits a different DCI, and ii) a single DCI (S-DCI)-based M-TRP transmission scheme in which one TRP transmits a DCI. For example, in the case of S-DCI, since all scheduling information for data transmitted by the M-TRP need to be transferred through one DCI, it may be used in an ideal BackHaul (ideal BH) environment where dynamic cooperation between two TRPs is possible.

Related to enhanced M-TRP transmission and reception

With respect to M-TRP transmission/reception in Rel-16 NR standardization, PDSCH transmission/reception according to the S-DCI based M-TRP transmission scheme and the M-DCI based M-TRP transmission scheme is supported.

First, an S-DCI based M-TRP PDSCH transmission scheme will be described.

One of SDM/FDM/TDM schemes may be used for S-DCI based M-TRP PDSCH transmission. In the case of SDM, the base station transmits one TB using a multi-layer, but transmits layers belonging to different DMRS CDM groups with different Tx beams (i.e., QCL RS or TCI state). Through this, the transmission capacity may be improved by increasing the number of layers compared to the existing S-TRP transmission scheme. In addition, when one TB is transmitted using multiple layers, some layers are transmitted to TRP 1 and the other layers are transmitted to TRP 2, whereby channel reliability due to diversity gain may be improved.

In the case of FDM, scheme 2a and 2b are supported. Here, scheme 2a is a scheme in which one TB is transmitted using a multi-RB, but RBs belonging to different RB groups are transmitted using different Tx beams (i.e., QCL RS or TCI state). Scheme 2b is a scheme for transmitting the same TB using different RB groups, but transmitting RBs belonging to different RB groups using different Tx beams (i.e., QCL RS or TCI state). In the case of TDM, schemes 3 and 4, are supported. Here, scheme 4 (i.e., inter-slot TDM) is a scheme for repeatedly transmitting the same TB in several slots, but transmitting slots belonging to different slot groups using different Tx beams (i.e., QCL RS or TCI state). On the other hand, Scheme 3 (i.e., intra-slot TDM) is a scheme for repeatedly transmitting the same TB in several OFDM symbol groups, but transmitting some OFDM symbol groups and the remaining OFDM symbol groups using different Tx beams (i.e., QCL RS or TCI state).

Next, an M-DCI based M-TRP PDSCH transmission scheme will be described.

M-DCI based MTRP PDSCH transmission is a scheme in which each TRP schedules and transmits a PDSCH through DCI. That is, TRP 1 transmits PDSCH 1 through DCI 1, and TRP 2 transmits PDSCH 2 through DCI 2. When PDSCH 1 and PDSCH 2 overlap on the same frequency and time resource, since two PDSCHs are received for the same RE, resource efficiency is increased and transmission capacity is increased. For this, the concept of a CORESET pool, which means a group of several CORESETs, has been introduced. For example, TRP 1 transmits a PDCCH through CORESET belonging to CORESET pool 0, and also transmits a PDSCH scheduled by the corresponding PDCCH. TRP 2 transmits a PDCCH through CORESET belonging to CORESET pool 1, and also transmits a PDSCH scheduled by the corresponding PDCCH.

Even in the case of PUSCH, a specific TRP may schedule PUSCH transmission to the UE through CORESET belonging to each COERSET pool. For example, some PUCCH resources may be scheduled by TRP 1, and the remaining PUCCH resources may be scheduled by TRP 2. The UE may transmit an independent PUSCH/PUCCH for each of TRPs 1 and 2.

In addition, the UE may recognize a PUSCH (or PUCCH) scheduled by DCI received based on different CORESETs (or CORESETs belonging to different CORESET groups) as a PUSCH (or PUCCH) transmitted to different TRPs or as a PUSCH (or PUCCH) of a different TRP. In addition, the scheme for UL transmission (e.g., PUSCH/PUCCH) transmitted to different TRPs may be equally applied to UL transmission transmitted to different panels belonging to the same TRP.

In addition, the CORESET group ID (or COERSET pool index with the same meaning) described/mentioned in the present disclosure may mean index/identification information (e.g., ID) for distinguishing CORESET for each TRP/panel. In addition, the CORESET group may mean a group/union of CORESETs distinguished by index/identification information (e.g., ID)/CORESET group ID for distinguishing CORESETs for each TRP/panel. As an example, the CORESET group ID may be specific index information defined in CORESET configuration. That is, the CORESET group may be configured/indicated/defined by the index defined in the CORESET configuring for each CORESET. And/or, the CORESET group ID may mean an index/identification information/indicator for classification/identification between CORESETs configured/related to each TRP/panel.

CORESET group ID described/mentioned in this disclosure may be expressed by being replaced with a specific index/specific identification information/specific indicator for classification/identification between CORESETs set/associated with each TRP/panel. Corresponding information may be configured/indicated through higher layer signaling (e.g., RRC signaling, MAC-CE, etc.) and/or physical layer signaling (e.g., DCI). As an example, it may be configured/indicated to perform PDCCH detection for each TRP/panel in a corresponding CORESET group unit, and UCI (e.g., CSI, HARQ-ACK/NACK, SR, etc.) for each TRP/panel in a corresponding CORESET group unit. And/or uplink physical channel resources (e.g., PUCCH/PRACH/SRS resources) may be configured/indicated to be managed/controlled separately. And/or, HARQ ACK/NACK (process/retransmission) for PDSCH/PUSCH, etc. scheduled for each TRP/panel in units of the corresponding CORESET group may be managed.

For example, the higher layer parameter ControlResourceSet IE (information element) is used to configured a time/frequency control resource set (control resource set, CORESET). The corresponding CORESET may be related to detection/reception of downlink control information. The ControlResourceSet IE may include a CORESET-related ID (e.g., controlResourceSetID)/CORESET pool index for CORESET (e.g., CORESETPoolIndex)/time/frequency resource setting of CORESET/TCI information related to CORESET. As an example, the index of the CORESET pool (e.g., CORESETPoolIndex) may be configured to 0 or 1. In the above description in the present disclosure, a CORESET group may correspond to a CORESET pool, and a CORESET group ID may correspond to a CORESET pool index (e.g., CORESETPoolIndex). The aforementioned ControlResourceSet (ie, CORESET) may be configured through higher layer signaling (e.g., RRC signaling).

Additionally, in relation to M-TRP transmission and reception in Rel-17 NR standardization, M-TRP PDCCH/PDSCH SFN transmission, S-DCI based M-TRP PUSCH repetition transmission, and single PUCCH resource based M-TRP PUCCH repetition transmission are supported. In the transmission schemes, the same contents (i.e., DCI/UL TB/UCI, etc.) are repeatedly transmitted by improving the URLLC target for increasing reliability. Here, M-TRP PDCCH repetition transmission is performed based on TDM or FDM, M-TRP PDCCH/PDSCH SFN transmission is performed in the same time/frequency/layer, and S-DCI based M-TRP PUSCH repetition transmission is performed based on TDM, and a single PUCCH resource based M-TRP PUCCH repetition transmission is performed based on TDM.

First, the S-DCI based M-TRP PDCCH repetition transmission scheme will be described.

In NR Rel-17 standardization, a plurality of CORESETs in which different TCI states (i.e., different QCL RSs) are configured for M-TRP PDCCH repetition transmission are configured to the terminal, and a plurality of SS sets respectively connected to the corresponding CORESETs are configured. The base station may indicate/configured that the SS set connected to one CORESET and the SS set connected to another CORESET are linked for repetition transmission to the terminal. Through this, the terminal may recognize that PDCCH candidates of the corresponding SS set are repeatedly transmitted.

For example, two CORESETs, CORESET 0 and CORESET 1, may be configured to the terminal, CORESET 0 and CORESET 1 may be connected to SS set 0 and SS set 1, respectively, and SS set 0 and SS set 1 may be linked. The terminal may recognize that the same DCI is repeatedly transmitted in the PDCCH candidate of SS set 0 and the PDCCH candidate of SS set 1, and based on a specific rule, the terminal may recognize that the specific PDCCH candidate of SS set 0 and the specific PDCCH candidate of SS set 1 correspond to a pair configured for repeatedly transmitting the same DCI. The two PDCCH candidates may be referred to as linked PDCCH candidates, and when the terminal properly receives any one of the two PDCCH candidates, the corresponding DCI may be successfully decoded. However, when receiving the PDCCH candidate of SS set 0, the terminal may use the QCL RS (i.e., DL beam) of the TCI state of COERSET 0 connected to SS set 0, and when receiving the PDCCH candidate of SS set 1, the terminal may use the QCL RS (ie, DL beam) of the TCI state of COERSET 1 connected to SS set 1. Accordingly, the terminal receives the associated PDCCH candidates using different beams.

Next, the M-DCI based M-TRP PDCCH repetition transmission scheme will be described.

As one of the M-TRP PDCCH repetition transmission types, a plurality of TRPs may repeatedly transmit the same DCI through the same time/frequency/DMRS port, and such a transmission method may be referred to as SFN PDCCH transmission. However, for SFN PDCCH transmission, the base station configures a plurality of TCI states in one CORESET instead of configuring a plurality of CORESETs in which different TCI states are configured. When the terminal receives the PDCCH candidate through the SS set connected to the one CORESET, the terminal may perform channel estimation of the PDCCH DMRS and attempt decoding by using all of the plurality of TCI states.

In addition, during the above-described M-TRP PDSCH repetition transmission, the two TRPs repeatedly transmit the corresponding channel to different resources. However, when the resources used by the two TRPs are the same, that is, when the same channel is repeatedly transmitted through the same frequency/time/layer (i.e., DMRS port), the reliability of the corresponding channel may be improved. In this case, since the same channel repeatedly transmitted is received while being transmitted (i.e., air) because the resources are not distinguished, it may be recognized as one channel (e.g., a composite channel) from a reception side (e.g., terminal). For SFN PDSCH transmission, two DL TCI states for PDSCH DMRS reception may be configured in the terminal.

Next, the S-DCI based M-TRP PUSCH repetition transmission scheme will be described.

In NR Rel-17 standardization, the base station configured two SRS sets to the terminal for S-DCI based M-TRP PUSCH transmission, and each set is used for indicating UL beam/QCL information for a UL Tx port for TRP 1 and TRP 2. In addition, the base station may indicate the SRS resource for each SRS resource set through two SRI fields included in one DCI, and may indicate up to two PC parameter sets. For example, the first SRI field may indicate the SRS resource and PC parameter set defined in SRS resource set 0, and the second SRI field may indicate the SRS resource and PC parameter set defined in SRS resource set 1. The terminal may be indicated with UL Tx port, PC parameter set, and UL beam/QCL information for TRP 1 through the first SRI field, and through this, the terminal performs PUSCH transmission in the TO corresponding to SRS resource set 0. Similarly, the terminal may be indicated with UL Tx port, PC parameter set, and UL beam/QCL information for TRP 2 through the second SRI field, and through this, the terminal performs PUSCH transmission in the TO corresponding to SRS resource set 1.

Next, the Single PUCCH resource based M-TRP PUCCH repetition transmission scheme will be described.

In NR Rel-17 standardization, the base station may activate/configure two spatial relation info on a single PUCCH resource to the terminal for the Single PUCCH resource based M-TRP PUCCH transmission (if FR1, enable/configure two PC parameter sets). When UL UCI is transmitted through the corresponding PUCCH resource, each spatial relation info is used to indicate to the terminal the spatial relation info for TRP 1 and TRP 2, respectively. For example, through the value indicated in the first spatial relation info, the terminal is indicated with Tx beam/PC parameter(s) toward TRP 1, and the terminal perform PUCCH transmission in TO corresponding to TRP 1 using corresponding information. Similarly, through the value indicated in the second spatial relation info, the terminal is indicated with Tx beam/PC parameter(s) toward TRP 2, and the terminal performs PUCCH transmission in the TO corresponding to TRP 2 using the corresponding information.

In addition, for M-TRP PUCCH repetition transmission, the configuring scheme is improved so that two spatial relation info may be configured in the PUCCH resource. That is, when power control (PC) parameters such as PLRS, Alpha, P0, and Closed loop index are set in each spatial relation info, spatial relation RS may be configured. As a result, PC information and spatial relation RS information corresponding to two TRPs may be configured through two spatial relation info. Through this, the terminal transmits UCI (i.e., CSI, ACK/NACK, SR, etc.) PUCCH in the first TO using the first spatial relation info, and transmits the same UCI PUCCH in the second TO using the second spatial relation info. In the present disclosure, a PUCCH resource in which two spatial relation info is configured is referred to as an M-TRP PUCCH resource, and a PUCCH resource in which one spatial relation info is configured is referred to as an S-TRP PUCCH resource.

Also, in the NR wireless communication system, S-DCI based multi-TB PUSCH/PDSCH scheduling may be considered. For example, in an ultra-high frequency band (e.g., beyond 5.26GHz, FR2 band) of an NR wireless communication system (e.g., a Rel-17 based NR system), a scheme in which one DCI simultaneously schedules multiple PUSCHs/PDSCHs may be supported.

As a specific example, a plurality of time resources (e.g., TDRA, Transmission Occasion (TO)) may be indicated at once through a time resource allocation field (e.g., TDRA field) of a DCI scheduling a PUSCH. In this case, different TBs for each TO may be transmitted through the PUSCH. The value of the frequency resource allocation field (e.g., FDRA field), the Modulation and Coding Scheme (MCS) field, the transmitted precoding matrix indicator (TPMI) field, and/or the SRS resource indicator (SRI) field of the DCI may be commonly applied to a plurality of scheduled TBs. In addition, new data indicator (NDI) and redundancy version (RV) for each TB may be individually indicated through the corresponding DCI, and one value for HARQ number may be indicated, but may sequentially increase in TO order based on an initial TO.

In addition, in relation to the NR wireless communication system, a method in which a terminal simultaneously transmits several channels/RSs of the same type or a method of simultaneously transmitting several channels/RSs of different types may be considered.

In the case of an existing terminal, an operation of transmitting multiple channels/RSs at one time is restricted. For example, the terminal may simultaneously transmit a plurality of SRS resources of different SRS resource sets for UL beam management, but may not simultaneously transmit a plurality of PUSCHs. Unlike this, in the future, an enhanced terminal may be considered to relax the above restrictions and simultaneously transmit a plurality of channels/RSs using a plurality of transmission panels. Such a terminal may be referred to as a simultaneous transmission across multi-panel (STxMP) terminal.

For example, a method for scheduling two PUSCHs (i.e., a first PUSCH and a second PUSCH) corresponding to two UL TBs to the same resource element (RE), and configuring a first spatial info RS and a first power control (PC) parameter set for the first PUSCH, and configuring a second spatial info RS and a second PC parameter set for the second PUSCH may be applied. That is, a first UL TCI state may be configured for the first PUSCH, and a second UL TCI state may be configured for the second PUSCH. In this case, the treminal may transmit the first PUSCH using the first Tx spatial filter (e.g. a first panel) corresponding to the first UL TCI state, and may transmit the second PUSCH using the second Tx spatial filter (e.g. a second panel) corresponding to the second UL TCI state.

In this regard, when the base station schedules the PUSCH through DCI, the base station may indicate the terminal with information on which one of the STxMP scheme, the single panel-based scheme, or the M-TRP-based PUSCH repetition transmission scheme is applied as the corresponding PUSCH transmission scheme. Here, the STxMP scheme is available when the terminal supports the STxMP capability, and the STxMP mode needs to be enabled in advance through RRC signaling or the like for the terminal. For this, the existing SRS resource set indication field may be redefined or a new DCI field may be introduced.

In addition, in the NR wireless communication system, the UL TCI state as well as the DL TCI state may be indicated through DL DCI (e.g., DCI format 1_1/1_2, etc.), and the UL TCI state may only be indicated without an indication of the DL TCI state. Through this, the scheme(s) used for configuring UL spatial information (e.g., UL beam) and power control (PC) in an existing NR wireless communication system (e.g., NR system in Rel-15/16) may be applied replacing/extending as a method for indicating the UL TCI state.

As a specific example, one UL TCI state may be indicated through the TCI field of DL DCI, and the corresponding UL TCI state may be applied to all PUSCHs/PUCCHs after a certain time (e.g., beam application time). In addition, the corresponding UL TCI state may be applied to some or all of the SRS resource sets.

In this regard, a method of indicating a plurality of UL TCI states (and/or DI TCI states) through a TCI field of DL DCI may also be considered.

PTRS-DMRS port association indication method for UL transmission in 8Tx-UE

The present disclosure proposes a method for indicating PTRS-DMRS port association for UL transmission in an 8Tx-UE.

Here, 8Tx-terminal may mean a UE that may support 8 ports/layers for UL transmission.

In this regard, for SRS configuration for UL transmission (e.g., codebook (CB)/non-codebook (NCB) based UL transmission, etc.) in 8Tx-UE, the UE may be configured with a single SRS resource set or may be configured with up to two SRS resource sets.

For example, if a UE is defined to be configured with a single SRS resource set, the SRS resource set may be configured with a maximum of eight single-port SRS resources. In this case, the UE may be configured with a maximum of eight PUSCH layers or DMRS ports through one SRS resource set (e.g., SRS resource set 0), and may perform UL transmission based on this.

For another example, if the UE is defined to be configured with up to two SRS resource sets, each SRS resource set may be configured with up to four single-port SRS resources. In this case, the UE may be configured with up to four PUSCH layers or DMRS ports through one SRS resource set (e.g., SRS resource set 0), and may be configured with up to four PUSCH layers or DMRS ports through another SRS resource set (e.g., SRS resource set 1). That is, the UE may perform UL transmission based on up to eight configured PUSCH layers or DMRS ports.

In the following, the present disclosure explains a method for indicating PTRS-DMRS port association considering the aforementioned 8Tx-UE through specific examples.

The method according to the embodiments of the present disclosure is described as an indication method for 8Tx-UE, but is not limited thereto, and may be extended and applied to UEs capable of supporting a larger number of ports/layers for UL transmission.

Embodiment 1

This embodiment relates to a method for indicating PTRS-DMRS port association when the number of PTRS ports of a terminal is set to 1.

When the number of PTRS ports is set to 1, the UE may receive information for which one of the N SRS resources indicated through the SRI field is associated with the PTRS port through the PTRS-DMRS port association field.

In this regard, the SRI field and the PTRS-DMRS port association field may be included in the DCI (e.g., DCI format 0_1, DCI format 0_2, etc.) that schedules PUSCH transmission.

For example, the UE may be instructed to N1 SRS resources in SRS resource set 0 and N2 SRS resources in SRS resource set 1 through the SRI field. In this regard, if the UE is indicated to SRS resources only in a single SRS resource set, the N2 value may be 0. In this case, the UE may be indicated to which one SRS resource among the N1+N2 SRS resources corresponding to the union is associated with the PTRS port through the PTRS-DMRS port association field.

At this time, since N SRS resources (e.g., N1+N2 SRS resources) are mapped 1-to-1 with N DMRS ports (e.g., N1+N2 DMRS ports), the indication may have the same meaning as being indicated which one DMRS port among the N DMRS ports is associated with the PTRS port.

The number of PTRS ports set to 1 may mean that the maximum number of PTRS ports (e.g., the higher layer parameter maxNrofPorts) is set to 1 (e.g., n1). Alternatively, even if the maximum number of PTRS ports is 2 (e.g., n2) or more, the indicated N SRS resources (e.g., N1+N2 SRS resources) may be configured to all share the same PTRS port index through RRC configuration. In this case, since the number of PTRS ports actually transmitted is 1, it may be considered that the number of PTRS ports is set to 1.

When the PTRS-DMRS port association field in the DCI is set to k-bit, the UE may be indicated using n-bits which DMRS port among the aforementioned N DMRS ports (e.g., N1+N2 DMRS ports) is associated with the PTRS port.

On the other hand, if the PTRS-DMRS port association field in the DCI is divided into a k1-bit first field and a k2-bit second field, one or more of the following example methods may be considered.

For example, a UE may be indicated which DMRS port among N DMRS ports (e.g., N1+N2 DMRS ports) is associated with a PTRS port by using k1+k2 bits, which are the sum of two fields (i.e., the first field and the second field).

As another example, DMRS port(s) that may be indicated by each field may be distinguished, and PTRS-DMRS port association information may be indicated based on this. As a specific example, the first field may be defined to indicate by selecting one of {none, port#0, port#1}, and the second field may be defined to indicate by selecting one of {none, port#2, port#3}. If the number of PTRS ports is 1, one of the two fields needs to indicate none.

Embodiment 2

This embodiment relates to a method for indicating PTRS-DMRS port association when the number of PTRS ports of a UE is set to 2.

When the number of PTRS ports is set to 2, the UE may distinguish between n1 SRS resources configured to share PTRS port index = 0 (hereinafter, PTRS port 0) and n2 SRS resources configured to share PTRS port index = 1 (hereinafter, PTRS port 1) through RRC configuration among the N SRS resources indicated through the SRI field. The UE may receive information about which SRS resource among the n1 SRS resources sharing PTRS port 0 is associated with PTRS port 0 and which SRS resource among the n2 SRS resources sharing PTRS port 1 is associated with PTRS port 1 through the PTRS-DMRS port association field.

In this regard, the SRI field and the PTRS-DMRS port association field may be included in the DCI (e.g., DCI format 0_1, DCI format 0_2, etc.) that schedules PUSCH transmission.

For example, the UE may be indicated to receive N1 SRS resources in SRS resource set 0 and N2 SRS resources in SRS resource set 1 through the SRI field in the DCI. In this regard, if the UE is indicated to receive SRS resources only in a single SRS resource set, the value of N2 may be 0. In this regard, the sum of N1 and N2 may be equal to the sum of n1 and n2, and as a special case, N1 SRS resources may be equal to n1 SRS resources, and N2 SRS resources may be equal to n2 SRS resources.

At this time, N SRS resources (e.g., N1+N2 SRS resources) may be mapped 1-to-1 with N DMRS ports (e.g., N1+N2 DMRS ports). Therefore, the information for which SRS resource is associated with PTRS port 0 and which SRS resource is associated with PTRS port 1 may have the same meaning as the information for which DMRS port is associated with PTRS port 0 and which DMRS port is associated with PTRS port 1.

The number of PTRS ports set to 2 may mean that the maximum number of PTRS ports (e.g., the higher layer parameter maxNrofPorts) is set to a value greater than or equal to 2 (e.g., n2), and N (e.g., N1+N2) SRS resources share a total of 2 PTRS port indices through RRC configuration. For example, n1 SRS resources may be RRC configured to share port 0, and n2 SRS resources may be RRC configured to share port 1.

When the PTRS-DMRS port association field in the DCI is set to k-bit (where, k=k1+k2), using the most significant bit (MSB) k1-bit, the UE may be indicated to a DMRS port associated with PTRS port 0 among n1 DMRS ports corresponding to n1 SRS resources. Additionally, using the least significant bit (LSB) or the remaining k2-bit, the UE may be indicated to a DMRS port associated with PTRS port 1 among n2 DMRS ports corresponding to n2 SRS resources. For example, k1 and k2 may be agreed/defined to be equal to the value of k/2, respectively.

On the other hand, it may be considered that the PTRS-DMRS port association field in the DCI is divided into a k1-bit first field and a k2-bit second field. In this case, the UE may be indicated to a DMRS port associated with PTRS port 0 among n1 DMRS ports corresponding to n1 SRS resources through the first field. Similarly, the UE may be indicated to a DMRS port associated with PTRS port 1 among n2 DMRS ports corresponding to n2 SRS resources through the second field.

In this regard, it may be desirable for k1 and k2 corresponding to each field size to be configured based on the worst case.

For example, for SRS resources belonging to an SRS resource set (e.g., SRS resource set 0, SRS resource set 1) configured for a UE, the number of SRS resources configured to share PTRS port 0 through RRC signaling/configuration is referred to as L1, and the number of SRS resources configured to share PTRS port 1 is referred to as L2. In this case, k1 may be determined/defined as $ceil(log2(L1))$, and k2 may be determined/defined as $ceil(log2(L2))$. Here, ceil() may mean a ceil function.

For another example, if the maximum number of UL PUSCH layers that a UE may transmit is referred to as L, the values of k1 and k2 may be determined/defined identically as $ceil(log2(L))$. Here, ceil() may mean a ceil function.

Additionally or alternatively, when N1 SRS resources are identical to n1 SRS resources, and when N2 SRS resources are identical to n2 SRS resources, the k1-bit and the k2-bit may be defined to indicate DMRS ports mapped to SRS resources within SRS resource set 0 and SRS resource set 1, respectively.

In the conventional wireless communication system (e.g., 3GPP NR Rel-17), the PTRS field is set for each SRS resource set, but if m PTRS ports are set, m DMRS ports may be indicated in each field. In contrast, in the case of the proposed method in the present disclosure, one DMRS port may be indicated by each field.

For example, if only one PTRS port is configured, a DMRS port mapped to an SRS resource within a default SRS resource set (e.g., SRS resource set 0) may be indicated using only the first field. Alternatively, a DMRS port mapped to an SRS resource within a default SRS resource set (e.g., SRS resource set 1) may be indicated using only the second field.

Embodiment 3

This embodiment relates to a method for indicating PTRS-DMRS port association when the number of PTRS ports of a UE is set to three.

When the number of PTRS ports is set to 3, the UE may distinguish, through the SRI field, n1 SRS resources configured to share PTRS port index = 0 (hereinafter, PTRS port 0) through RRC configuration among the N SRS resources indicated, n2 SRS resources configured to share PTRS port index = 1 (hereinafter, PTRS port 1), and n3 SRS resources configured to share PTRS port index = 2 (hereinafter, PTRS port 2). The UE may receive, through the PTRS-DMRS port association field, information for which SRS resource among the n1 SRS resources sharing PTRS port 0 is associated with PTRS port 0, information for which SRS resource among the n2 SRS resources sharing PTRS port 1 is associated with PTRS port 1, and information for which SRS resource among the n3 SRS resources sharing PTRS port 2 is associated with PTRS port 2.

In this regard, the SRI field and the PTRS-DMRS port association field may be included in the DCI (e.g., DCI format 0_1, DCI format 0_2, etc.) that schedules PUSCH transmission.

For example, the UE may be instructed of N1 SRS resources in SRS resource set 0 and N2 SRS resources in SRS resource set 1 through the SRI field in the DCI. In this regard, if the UE is indicated of SRS resources in only a single SRS resource set, the value of N2 may be 0. In this regard, the sum of N1 and N2 may be equal to the sum of n1, n2, and n3.

At this time, N SRS resources (e.g., N1+N2 SRS resources) may be mapped 1-to-1 with N DMRS ports (e.g., N1+N2 DMRS ports). Accordingly, which SRS resource may have the same meaning as information for which PTRS port (e.g., PTRS port 0/1/2).

The number of PTRS ports set to 3 may mean that the maximum number of PTRS ports (e.g., the higher layer parameter maxNrofPorts) is set to a value greater than or equal to 3 (e.g., n3), and N (e.g., N1+N2) SRS resources share a total of 3 PTRS port indices through RRC configuration. For example, n1 SRS resources may be RRC configured to share port 0, n2 SRS resources may share port 1, and n3 SRS resources may share port 2.

When the PTRS-DMRS port association field in the DCI is set to k-bits (where k=k1+k2+k3), the UE may be indicated to the DMRS port associated with PTRS port 0 using the MSB k1-bit. Additionally, the UE may be indicated to the DMRS port associated with PTRS port 1 using the subsequent k2-bit. Additionally, the UE may be indicated to the DMRS port associated with PTRS port 2 using the subsequent k3-bit. For example, k1, k2 and k3 may be agreed/defined to be equal to the value of k/3, respectively.

On the other hand, it may be considered that the PTRS-DMRS port association field within the DCI is divided into a k1-bit first field and a k2-bit second field.

In this case, the UE may be indicated to a DMRS port associated with PTRS port 0 (among n1 DMRS ports corresponding to n1 SRS resources) through the first field. Additionally, the UE may be indicated to a DMRS port associated with PTRS port 1 (among n2 DMRS ports corresponding to n2 SRS resources) through some bits of the second field, and may be indicated to a DMRS port associated with PTRS port 2 (among n3 DMRS ports corresponding to n3 SRS resources) through the remaining bits of the second field.

Alternatively, the UE may be indicated to the DMRS ports associated with PTRS port 0 and PTRS port 1, respectively, through some bits and the remaining bits of the first field, and to the DMRS port associated with PTRS port 1, through the second field.

Alternatively, it may be considered to extend the number of PTRS-DMRS port association fields to be configured/defined to a number greater than 2 (e.g., 3). In this case, a first field may be defined to indicate a DMRS port association associated with PTRS port 0, a second field may be defined to indicate a DMRS port association associated with PTRS port 1, and a third field may be defined to indicate a DMRS port association associated with PTRS port 2.

In this regard, it may be desirable for k1, k2, and k3 to be configured based on the worst case. Here, k1, k2, and k3 may correspond to field sizes, respectively, or some combinations of these may correspond to one field.

For example, for SRS resources belonging to an SRS resource set for PUSCH transmission to a UE (e.g., a single SRS resource set, multiple SRS resource sets, etc.), the number of SRS resources configured to share PTRS port 0 through RRC signaling/configuration is referred to as L1, the number of SRS resources configured to share PTRS port 1 is referred to as L2, and the number of SRS resources configured to share PTRS port 2 is referred to as L3. In this case, k1 may be determined/defined as ceil(log2(L1)), k2 may be determined/defined as ceil(log2(L2)), and k3 may be determined/defined as ceil(log2(L3)). Here, ceil() may mean a ceil function.

For another example, if the maximum number of UL PUSCH layers that a UE may transmit is referred to as L, the values of k1, k2, and k3 may be determined/defined identically as ceil(log2(L)). Here, ceil() may mean a ceil function.

Additionally or alternatively, considering a case where the PTRS-DMRS port association field is composed of two fields, i.e., a first field and a second field as described above, the size of the first field (e.g., k1) may be determined/defined as ceil(log2(L1)), and the size of the second field (e.g., k2) may be determined/defined as ceil(log2(L2)) + ceil(log2(L3)).

In this case, the first field may indicate an association between PTRS port 0 and the DMRS port. Additionally, among the second fields, the ceil(log2(L2))-bit may indicate an association between PTRS port 1 and the DMRS port, and the ceil(log2(L3))-bit may indicate an association between PTRS port 2 and the DMRS port.

Additionally or alternatively, considering a case where the PTRS-DMRS port association field is composed of two fields, i.e., a first field and a second field as described above, the size of the first field (e.g., k1) may be determined/defined as ceil(log2(L1)), and the size of the second field (e.g., k2) may be determined/defined as ceil(log2(L2*L3)).

In this case, the first field may indicate an association between PTRS port 0 and the DMRS port. Additionally, the second field may jointly indicate an association between PTRS port 1 and PTRS port 2 and the DMRS port. That is, the indication by the second field may be based on joint encoding/decoding related to the DMRS port indication associated with PTRS port 1 and the DMRS port indication associated with PTRS port 2.

Embodiment 4

This embodiment relates to a method for indicating PTRS-DMRS port association when the number of PTRS ports of a terminal is set to 4.

When the number of PTRS ports is set to 4, the UE may distinguish among the N SRS resources indicated through the SRI field, n1 SRS resources configured to share PTRS port index = 0 (hereinafter, PTRS port 0), n2 SRS resources configured to share PTRS port index = 1 (hereinafter, PTRS port 1), n3 SRS resources configured to share PTRS port index = 2 (hereinafter, PTRS port 2), and n4 SRS resources configured to share PTRS port index = 3 (hereinafter, PTRS port 3). The UE may be indicated, through the PTRS-DMRS port association field, to receive information for which one of the n1 SRS resources sharing PTRS port 0 is associated with PTRS port 0, information for which one of the n2 SRS resources sharing PTRS port 1 is associated with PTRS port 1, information for which one of the n3 SRS resources sharing PTRS port 2 is associated with PTRS port 2, and information for which one of the n4 SRS resources sharing PTRS port 3 is associated with PTRS port 3.

In this regard, the SRI field and the PTRS-DMRS port association field may be included in the DCI (e.g., DCI format 0_1, DCI format 0_2, etc.) that schedules PUSCH transmission.

For example, the UE may be indicated of N1 SRS resources in SRS resource set 0 and N2 SRS resources in SRS resource set 1 through the SRI field in the DCI. In this regard, if the UE is indicated of SRS resources in only a single SRS resource set, the value of N2 may be 0. In this regard, the sum of N1 and N2 may be equal to the sum of n1, n2, n3, and n4.

At this time, N SRS resources (e.g., N1+N2 SRS resources) may be mapped 1-to-1 with N DMRS ports (e.g., N1+N2 DMRS ports). Accordingly, which SRS resource may have the same meaning as information for which PTRS port (e.g., PTRS port 0/1/2).

The number of PTRS ports set to 3 may mean that the maximum number of PTRS ports (e.g., the higher layer parameter maxNrofPorts) is set to a value greater than or equal to 4 (e.g., n4), and N (e.g., N1+N2) SRS resources share a total of 4 PTRS port indices through RRC configuration. For example, n1 SRS resources may be RRC configured to share port 0, n2 SRS resources may be RRC configured to share port 1, n3 SRS resources may be RRC configured to share port 2, and n4 SRS resources may be RRC configured to share port 3.

When the PTRS-DMRS port association field in the DCI is set to k-bits (where, k=k1+k2+k3+k4), the UE may be indicated to the DMRS port associated with PTRS port 0 using the MSB k1-bit. Additionally, the UE may be indicated to the DMRS port associated with PTRS port 1 using the subsequent k2-bit. Additionally, the UE may be indicated to the DMRS port associated with PTRS port 2 using the subsequent k3-bit. Additionally, the UE may be indicated to the DMRS port associated with PTRS port 3 using the subsequent k4-bit. For example, k1, k2, k3, and k4 may be agreed/specified to be equal to the value of k/3, respectively.

On the other hand, it may be considered that the PTRS-DMRS port association field within the DCI is divided into a k1-bit first field and a k2-bit second field.

In this case, the UE may be indicated to a DMRS port associated with PTRS port 0 (among n1 DMRS ports corresponding to n1 SRS resources) through some bits of the first field, and to a DMRS port associated with PTRS port 1 (among n2 DMRS ports corresponding to n2 SRS resources) through the remaining bits of the first field. Additionally, the UE may be indicated to a DMRS port associated with PTRS port 2 (among n3 DMRS ports corresponding to n3 SRS resources) through some bits of the second field, and to a DMRS port associated with PTRS port 3 (among n4 DMRS ports corresponding to n4 SRS resources) through the remaining bits of the second field.

Alternatively, it may be considered to extend the number of PTRS-DMRS port association fields to be configured/defined to a number greater than 2 (e.g., 4). In this case, the first field may be defined to indicate a DMRS port association associated with PTRS port 0, the second field may be defined to indicate a DMRS port association associated with PTRS port 1, the third field may be defined to indicate a DMRS port association associated with PTRS port 2, and the fourth field may be defined to indicate a DMRS port association associated with PTRS port 3.

In this regard, it may be desirable for k1, k2, k3, and k4 to be configured based on the worst case. Here, k1, k2, k3, and k4 may correspond to field sizes, respectively, or some combinations of these may correspond to one field.

For example, for SRS resources belonging to an SRS resource set (e.g., a single SRS resource set, multiple SRS resource sets, etc.) configured for PUSCH transmission to a terminal, the number of SRS resources configured to share PTRS port 0 through RRC signaling/configuration is referred to as L1, the number of SRS resources configured to share PTRS port 1 is referred to as L2, the number of SRS resources configured to share PTRS port 2 is referred to as L3, and the number of SRS resources configured to share PTRS port 3 is referred to as L4. In this case, k1 may be determined/defined as ceil(log2(L1)), k2 may be determined/defined as ceil(log2(L2)), k3 may be determined/defined as ceil(log2(L3)), and k4 may be determined/defined as ceil(log2(L4)). Here, ceil() can mean a ceil function.

For another example, if the maximum number of UL PUSCH layers that a UE may transmit is designated as L, the values of k1, k2, k3, and k4 may be determined/defined identically as ceil(log2(L)). Here, ceil() may mean a ceil function.

Additionally or alternatively, considering a case where the PTRS-DMRS port association field is composed of two fields, i.e., a first field and a second field as described above, the size of the first field (e.g., k1) may be determined/defined as ceil(log2(L1)) + ceil(log2(L2)), and the size of the second field (e.g., k2) may be determined/defined as ceil(log2(L3)) + ceil(log2(L4)).

In this case, among the first fields, the ceil(log2(L1))-bit may indicate an association between PTRS port 0 and the DMRS port, and the ceil(log2(L2))-bit may indicate an association between PTRS port 1 and the DMRS port. Additionally, among the second fields, the ceil(log2(L3))-bit may indicate an association between PTRS port 2 and the DMRS port, and the ceil(log2(L4))-bit may indicate an association between PTRS port 3 and the DMRS port.

Additionally or alternatively, considering a case where the PTRS-DMRS port association field is composed of two fields, i.e., a first field and a second field as described above, the size of the first field (e.g., k1) may be determined/defined as ceil(log2(L1*L2)), and the size of the second field (e.g., k2) may be determined/defined as ceil(log2(L3*L4)).

In this case, the first field may jointly indicate the association between PTRS port 0 and PTRS port 1 and the DMRS port. That is, the indication by the first field may be based on joint encoding/decoding related to the DMRS port indication associated with PTRS port 0 and the DMRS port indication associated with PTRS port 1. In addition, the second field may jointly indicate the association between PTRS port 2 and PTRS port 3 and the DMRS port. That is, the indication by the second field may be based on joint encoding/decoding related to the DMRS port indication associated with PTRS port 2 and the DMRS port indication associated with PTRS port 3.

The embodiments in the present disclosure described above may be applied individually or based on a combination/combination between some embodiments.

Additionally, whether the method according to the embodiment of the present disclosure is applicable or not, the information/factors/parameters used in the method may be indicated to the UE by the base station through specific signaling (e.g., DCI, MAC-CE, RRC configuration/signal, etc.) or reported to the base station by the UE.

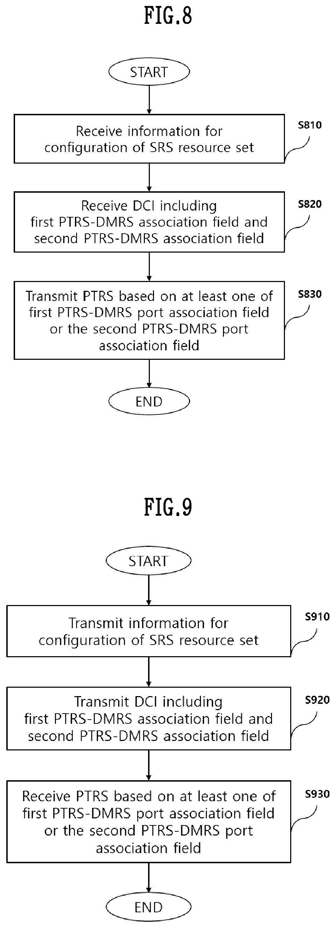

FIG. 8 is a diagram illustrating the operation of a UE for performing PTRS transmission and reception according to an embodiment of the present disclosure.

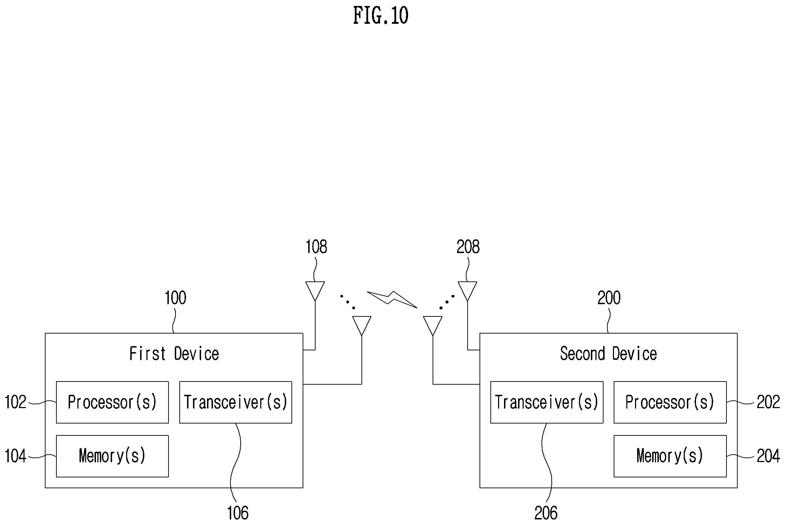

FIG. 8 illustrates an operation of a UE based on the previously proposed method (e.g., any one or a combination of Embodiments 1 to 4 and detailed embodiments thereof). The example of FIG. 8 is for convenience of description, and does not limit the scope of the present disclosure. Some step(s) illustrated in FIG. 8 may be omitted depending on circumstances and/or configruation. In addition, the UE in FIG. 8 is only one example, and may be implemented as the apparatus illustrated in FIG. 10 below. For example, the processor 102/202 of FIG. 10 may control to transmit and receive channel/signal/data/information (e.g., RRC signaling, MAC CE, DCI for UL/DL scheduling, SRS, PDCCH, PDSCH, PUSCH, PUCCH, etc.) using the transceiver 106/206, and may control to store channel/signal/data/information to be transmitted or received in the memory 104/204.

Also, the operation of FIG. 8 may be processed by one or more processors (102, 202) in FIG. 10, and the operation of FIG. 8 may be stored in a memory (e.g., one or more memories (104, 204) in FIG. 10, in the form of instructions/programs (e.g., instructions, executable code) for driving at least one processor (102, 202) in FIG. 10.

In step S810, the UE may receive information for the configuration of an SRS resource set.

For example, the corresponding SRS resource set may correspond to an SRS resource set configured for codebook-based PUSCH transmission or non-codebook-based PUSCH transmission.

The corresponding SRS resource set may be configured to include one or more SRS resources, and each SRS resource may be configured to share a PTRS port.

In step S820, the UE may receive DCI including a first PTRS-DMRS port association field and a second PTRS-DMRS port association field.

In this regard, when three PTRS ports are set for a UE, the first PTRS-DMRS port association field may indicate information for one DMRS port associated with one PTRS port, and the second PTRS-DMRS port association field may indicate information for two DMRS ports associated with two PTRS ports.

At this time, the field size for the first PTRS-DMRS port association field and the second PTRS-DMRS port association field may be determined based on the number of specific SRS resources belonging to the SRS resource configured for the UE (i.e., the SRS resource set in step S810).

For example, the number of bits of the first PTRS-DMRS port association field may be determined based on the number of SRS resources configured to share the one PTRS port among the SRS resources belonging to the SRS resource set configured for the UE. Specifically, the number of bits of the first PTRS-DMRS port association field may be determined as ceil(log2(L1)). Here, ceil() represents a ceil function, and L1 represents the number of SRS resources configured to share the one PTRS port.

For example, the number of bits in the second PTRS-DMRS port association field may be determined based on the number of SRS resources configured to share the two PTRS ports among the SRS resources belonging to the SRS resource set configured for the UE.

For example, when the second PTRS-DMRS port association field is composed of a first part and a second part, the number of bits of the first part may be determined based on the number of SRS resources configured to share the first PTRS port among the two PTRS ports, and the number of bits of the second part may be determined based on the number of SRS resources configured to share the second PTRS port among the two PTRS ports. Specifically, the number of bits of the first part may be determined by ceil(log2(L2)), and the number of bits of the second part may be determined by ceil(log2(L3)). Here, ceil() represents a ceil function, L2 represents the number of SRS resources configured to share the first PTRS port, and L3 represents the number of SRS resources configured to share the second PTRS port.

As another example, when two DMRS ports associated with two PTRS ports are jointly indicated, the number of bits of the second PTRS-DMRS port association field may be determined as ceil(log2(L2*L3)). Here, ceil() represents a ceil function, L2 represents the number of SRS resources configured to share the first PTRS port among the two PTRS ports, and L3 represents the number of SRS resources configured to share the second PTRS port among the two PTRS ports.

Additionally, when four PTRS ports are set for the UE, the first PTRS-DMRS port association field and the second PTRS-DMRS port association field may each indicate information for two DMRS ports associated with two PTRS ports.

For example, the number of bits of the first PTRS-DMRS port association field may be determined based on the number of SRS resources configured to share the first PTRS port and the number of SRS resources configured to share the second PTRS port, among SRS resources belonging to the SRS resource set configured for the UE. The number of bits of the second PTRS-DMRS port association field may be determined based on the number of SRS resources configured to share the third PTRS port and the number of SRS resources seconfigured to share the fourth PTRS port, among SRS resources belonging to the SRS resource set configured for the UE.

As a specific example, when the first PTRS-DMRS port association field and the second PTRS-DMRS port association field are each composed of two parts, the number of bits of the first PTRS-DMRS port association field may be determined as the sum of the number of bits according to the number of SRS resources configured to share the first PTRS port and the number of bits according to the number of SRS resources configured to share the second PTRS port. The number of bits of the second PTRS-DMRS port association field may be determined as the sum of the number of bits according to the number of SRS resources configured to share the third PTRS port and the number of bits according to the number of SRS resources configured to share the fourth PTRS port.

As a specific example, if the DMRS port associated with the first PTRS port and the DMRS port associated with the second PTRS port are jointly indicated, the number of bits of the first PTRS-DMRS port association field may be determined as ceil(log2(L1*L2)). Additionally, if the DMRS port associated with the third PTRS port and the DMRS port associated with the fourth PTRS port are jointly indicated, the number of bits of the second PTRS-DMRS port association field may be determined as ceil(log2(L3*L4)). Here, ceil() represents a ceil function, L1 represents the number of SRS resources configured to share the first PTRS port, L2 represents the number of SRS resources configured to share the second PTRS port, L3 represents the number of SRS resources configured to share the third PTRS port, and L4 represents the number of SRS resources configured to share the fourth PTRS port.

In step S830, the UE may transmit PTRS based on at least one of the first PTRS-DMRS port association field or the second PTRS-DMRS port association field described above.

The operation of the UE and/or information on the configuration/indication in FIG. 8 may be embodied based on descriptions in the above-described embodiments (e.g., Embodiment 1, Embodiment 2, Embodiment 3, Embodiment 4 and detailed embodiments thereof) in the present disclosure.

FIG. 9 is a diagram illustrating the operation of a base station for performing PTRS transmission and reception according to an embodiment of the present disclosure.

FIG. 9 illustrates an operation of a base station based on the previously proposed method (e.g., any one or a combination of Embodiments 1 to 4 and detailed embodiments thereof). The example of FIG. 9 is for convenience of description, and does not limit the scope of the present disclosure. Some step(s) illustrated in FIG. 9 may be omitted depending on circumstances and/or configruation. In addition, the base station in FIG. 9 is only one example, and may be implemented as the apparatus illustrated in FIG. 10 below. For example, the processor 102/202 of FIG. 10 may control to transmit and receive channel/signal/data/information (e.g., RRC signaling, MAC CE, DCI for UL/DL scheduling, SRS, PDCCH, PDSCH, PUSCH, PUCCH, etc.) using the transceiver 106/206, and may control to store channel/signal/data/information to be transmitted or received in the memory 104/204.

Also, the operation of FIG. 9 may be processed by one or more processors (102, 202) in FIG. 10, and the operation of FIG. 9 may be stored in a memory (e.g., one or more memories (104, 204) in FIG. 10, in the form of instructions/programs (e.g., instructions, executable code) for driving at least one processor (102, 202) in FIG. 10.

In step S910, the base station may transmit information for the configuration of an SRS resource set.

For example, the corresponding SRS resource set may correspond to an SRS resource set configured for codebook-based PUSCH transmission or non-codebook-based PUSCH transmission.

The corresponding SRS resource set may be configured to include one or more SRS resources, and each SRS resource may be configured to share a PTRS port.

In step S920, the base station may transmit DCI including a first PTRS-DMRS port association field and a second PTRS-DMRS port association field.

In this regard, when three PTRS ports are configured for a UE, the first PTRS-DMRS port association field may indicate information for one DMRS port associated with one PTRS port, and the second PTRS-DMRS port association field may indicate information for two DMRS ports associated with two PTRS ports.

At this time, the field size for the first PTRS-DMRS port association field and the second PTRS-DMRS port association field may be determined based on the number of specific SRS resources belonging to the SRS resource set configured for the UE (i.e., the SRS resource set in step S810).

In step S930, the base station may receive a PTRS based on at least one of the first PTRS-DMRS port association field or the second PTRS-DMRS port association field described above.

Details regarding the size, configuration, and the likes of the first PTRS-DMRS port association field and the second PTRS-DMRS port association field redundant with those described in Fig. 8, so a detailed description thereof is omitted in Fig. 9.

The operation of the base station and/or information on the configuration/indication in FIG. 9 may be embodied based on descriptions in the above-described embodiments (e.g., Embodiment 1, Embodiment 2, Embodiment 3, Embodiment 4 and detailed embodiments thereof) in the present disclosure.

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[INDUSTRIAL APPLICABILITY]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method performed by a user equipment (UE) in a wireless communication system, the method comprising:

receiving information for configuration of a sounding reference signal (SRS) resource set;
receiving downlink control information (DCI) including a first Phase tracking reference signal-demodulation reference signal (PTSR-DMRS) port association field and a second PTRS-DMRS port association field; and
transmitting a PTRS based on at least one of the first PTRS-DMRS port association field or the second PTRS-DMRS port association field,
wherein, based on three PTRS ports being configured for the UE, the first PTRS-DMRS port association field indicates information for one DMRS port associated with one PTRS port, and the second PTRS-DMRS port association field indicates information for two DMRS ports associated with two PTRS ports, and
wherein field sizes for the first PTRS-DMRS port association field and the second PTRS-DMRS port association field are determined based on a number of specific SRS resources belonging to the SRS resource set.

2.   The method of claim 1,
wherein a number of bits of the first PTRS-DMRS port association field is determined based on a number of SRS resources configured to share the one PTRS port among SRS resources belonging to the SRS resource set.

3.   The method of claim 2,

wherein the number of bits of the first PTRS-DMRS port association field is determined by ceil(log2(L1)),
where ceil() represents a ceil function and L1 represents the number of SRS resources configured to share the one PTRS port.

4.   The method of claim 1,
wherein a number of bits of the secondPTRS-DMRS port association field is determined based on a number of SRS resources configured to share the two PTRS ports among SRS resources belonging to the SRS resource set.

5.   The method of claim 4,
wherein, based on the second PTRS-DMRS port association field including a first part and a second part, a number of bits of the first part is determined based on a number of SRS resources configured to share a first PTRS port among the two PTRS ports, and a number of bits of the second part is determined based on a number of SRS resources configured to share a second PTRS port among the two PTRS ports.

6.   The method of claim 5,

**EP 4 597 901 A1**

wherein the number of bits of the first part is determined by ceil(log2(L2)), and the number of bits of the second part is determined by ceil(log2(L3)),

where ceil() represents a ceil function, L2 represents a number of SRS resources configured to share the first PTRS port, and L3 represents a number of SRS resources configured to share the second PTRS port.

**7.** The method of claim 4,

wherein, based on two DMRS ports associated with the two PTRS ports being jointly indicated, the number of bits of the second PTRS-DMRS port association field is determined as ceil(log2(L2*L3)),

where ceil() represents a deil function, L2 represents a number of SRS resources configured to share a first PTRS port among the two PTRS ports, and L3 represents a number of SRS resources configured to share a second PTRS port among the two PTRS ports.

**8.** The method of claim 1,

wherein, based on the four PTRS ports being configured for the UE, the first PTRS-DMRS port association field and the second PTRS-DMRS port association field each indicate information for two DMRS ports associated with two PTRS ports.

**9.** The method of claim 8,

wherein a number of bits of the first PTRS-DMRS port association field is determined based on a number of SRS resources configured to share a first PTRS port and a number of SRS resources configured to share a second PTRS port, among SRS resources belonging to the SRS resource set, and

wherein a number of bits of the second PTRS-DMRS port association field is determined based on a number of SRS resources configured to share a third PTRS port and a number of SRS resources configured to share a fourth PTRS port among SRS resources belonging to the SRS resource set.

**10.** The method of claim 9,

wherein, based on each of the first PTRS-DMRS port association field and the second PTRS-DMRS port association field including two parts,

the number of bits of the first PTRS-DMRS port association field is determined as a sum of a number of bits according to the number of SRS resources configured to share the first PTRS port and a number of bits according to the number of SRS resources configured to share the second PTRS port, and

the number of bits of the second PTRS-DMRS port association field is determined as a sum of a number of bits according to the number of SRS resources configured to share the third PTRS port and a number of bits according to the number of SRS resources configured to share the fourth PTRS port.

**11.** The method of claim 9,

wherein, based on a DMRS port associated with the first PTRS port and a DMRS port associated with the second PTRS port being jointly indicated, the number of bits of the first PTRS-DMRS port association field is determined as ceil(log2(L1*L2)), and

wherein, based on a DMRS port associated with the third PTRS port and a DMRS port associated with the fourth PTRS port being jointly indicated, the number of bits of the second PTRS-DMRS port association field is determined as ceil(log2(L3*L4)),

where, ceil() represents a ceil function, L1 represents a number of SRS resources configured to share the first PTRS port, L2 represents a number of SRS resources configured to share the second PTRS port, L3 represents a number of SRS resources configured to share the third PTRS port, and L4 represents a number of SRS resources configured to share the fourth PTRS port.

**12.** A user equipment (UE) in a wireless communication system, the UE comprising:

at least one transceiver; and
at least one processor coupled with the at least one transceiver,
wherein the at least one processor is configured to:

receive information for configuration of a sounding reference signal (SRS) resource set;

29

receive downlink control information (DCI) including a first Phase tracking reference signal-demodulation reference signal (PTSR-DMRS) port association field and a second PTRS-DMRS port association field; and transmit a PTRS based on at least one of the first PTRS-DMRS port association field or the second PTRS-DMRS port association field,

wherein, based on three PTRS ports being configured for the UE, the first PTRS-DMRS port association field indicates information for one DMRS port associated with one PTRS port, and the second PTRS-DMRS port association field indicates information for two DMRS ports associated with two PTRS ports, and

wherein field sizes for the first PTRS-DMRS port association field and the second PTRS-DMRS port association field are determined based on a number of specific SRS resources belonging to the SRS resource set.

13. A method performed by a base station in a wireless communication system, the method comprising:

transmitting information for configuration of a sounding reference signal (SRS) resource set;
transmitting downlink control information (DCI) including a first Phase tracking reference signal-demodulation reference signal (PTSR-DMRS) port association field and a second PTRS-DMRS port association field; and receiving a PTRS based on at least one of the first PTRS-DMRS port association field or the second PTRS-DMRS port association field,
wherein, based on three PTRS ports being configured for the UE, the first PTRS-DMRS port association field indicates information for one DMRS port associated with one PTRS port, and the second PTRS-DMRS port association field indicates information for two DMRS ports associated with two PTRS ports, and
wherein field sizes for the first PTRS-DMRS port association field and the second PTRS-DMRS port association field are determined based on a number of specific SRS resources belonging to the SRS resource set.

14. A base station in a wireless communication system, the base station comprising:

at least one transceiver; and
at least one processor coupled with the at least one transceiver,
wherein the at least one processor is configured to:

transmit information for configuration of a sounding reference signal (SRS) resource set;
transmit downlink control information (DCI) including a first Phase tracking reference signal-demodulation reference signal (PTSR-DMRS) port association field and a second PTRS-DMRS port association field; and receive a PTRS based on at least one of the first PTRS-DMRS port association field or the second PTRS-DMRS port association field,
wherein, based on three PTRS ports being configured for the UE, the first PTRS-DMRS port association field indicates information for one DMRS port associated with one PTRS port, and the second PTRS-DMRS port association field indicates information for two DMRS ports associated with two PTRS ports, and
wherein field sizes for the first PTRS-DMRS port association field and the second PTRS-DMRS port association field are determined based on a number of specific SRS resources belonging to the SRS resource set.

15. A processing device configured to control a user equipment in a wireless communication system, the processing device comprising:

one or more processors; and
one or more computer memories operatively connected to the one or more processors and storing instructions for performing a method according to any one of claims 1 to 15 based on being executed by the one or more processors.

16. At least one non-transitory computer readable medium storing one or more instructions,
wherein the one or more instructions are executed by one or more processors to control an apparatus in a wireless communication system to perform a method according to any one of claims 1 to 15.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

FIG.6

EP 4 597 901 A1

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG.7

Layer group #1
for CW #1

Layer group #2
for CW #1

TRP 1   TRP 2

UE1

(a)

Layer group #1
for CW #1

Layer group #2
for CW #2

TRP 1   TRP 2

UE1

(b)

EP 4 597 901 A1

# FIG.8

START

Receive information for
configuration of SRS resource set — S810

Receive DCI including
first PTRS-DMRS association field and
second PTRS-DMRS association field — S820

Transmit PTRS based on at least one of
first PTRS-DMRS port association field
or the second PTRS-DMRS port
association field — S830

END

# FIG.9

START

Transmit information for
configuration of SRS resource set — S910

Transmit DCI including
first PTRS-DMRS association field and
second PTRS-DMRS association field — S920

Receive PTRS based on at least one of
first PTRS-DMRS port association field
or the second PTRS-DMRS port
association field — S930

END

FIG.10

## INTERNATIONAL SEARCH REPORT

| International application No. |
| --- |
| **PCT/KR2023/014189** |

| **A.** | **CLASSIFICATION OF SUBJECT MATTER** |
| --- | --- |

**H04L 5/00**(2006.01)i; **H04W 72/23**(2023.01)i

According to International Patent Classification (IPC) or to both national classification and IPC

| **B.** | **FIELDS SEARCHED** |
| --- | --- |

Minimum documentation searched (classification system followed by classification symbols)

H04L 5/00(2006.01); H04L 1/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위상 추적 참조 신호(phase tracking reference signal, PTRS), 복조 참조 신호 (demodulation reference signal, DMRS), 연관 필드(association field), 사운딩 참조 신호(sounding reference signal, SRS), 포트 (port), 비트(bit), 매핑(mapping), 공유(share)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | WO 2022-083634 A1 (VIVO MOBILE COMMUNICATION CO., LTD.) 28 April 2022 (2022-04-28)<br>See page 6, lines 1 and 9-10 and page 9, lines 2-15; and claims 9 and 16. | 1-16 |
| Y | US 2022-0190985 A1 (SPREADTRUM COMMUNICATIONS (SHANGHAI) CO., LTD.) 16 June 2022 (2022-06-16)<br>See paragraphs [0034], [0042]-[0043] and [0054]; and claims 1-2, 9, 11 and 18. | 1-16 |
| Y | WO 2022-104687 A1 (ZTE CORPORATION) 27 May 2022 (2022-05-27)<br>See page 28, lines 10-15; page 31, lines 4-13 and page 33, lines 10-17; and claim 6. | 3,5-7,11 |
| Y | WO 2022-025590 A1 (LG ELECTRONICS INC.) 03 February 2022 (2022-02-03)<br>See paragraphs [0190]-[0194] and [0196]-[0198]. | 3,6-7,11 |
| A | WO 2022-152271 A1 (VIVO MOBILE COMMUNICATION CO., LTD.) 21 July 2022 (2022-07-21)<br>See page 7, lines 41-48; and claims 1-17. | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 January 2024** | **10 January 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/014189**

| Patent document cited in search report | | | Publication date (day/month/year) | Patent family member(s) | | | Publication date (day/month/year) |
|---|---|---|---|---|---|---|---|
| WO | 2022-083634 | A1 | 28 April 2022 | CN | 114501629 | A | 13 May 2022 |
| | | | | CN | 114501629 | B | 21 July 2023 |
| | | | | EP | 4236530 | A1 | 30 August 2023 |
| | | | | US | 2023-0261836 | A1 | 17 August 2023 |
| US | 2022-0190985 | A1 | 16 June 2022 | CN | 110351037 | A | 18 October 2019 |
| | | | | CN | 110351037 | B | 01 September 2020 |
| | | | | US | 11303411 | B2 | 12 April 2022 |
| | | | | US | 2020-0412503 | A1 | 31 December 2020 |
| | | | | WO | 2019-192448 | A1 | 10 October 2019 |
| WO | 2022-104687 | A1 | 27 May 2022 | CN | 116438756 | A | 14 July 2023 |
| | | | | CN | 116887417 | A | 13 October 2023 |
| | | | | EP | 4233220 | A1 | 30 August 2023 |
| | | | | KR | 10-2023-0112628 | A | 27 July 2023 |
| | | | | US | 2023-0371042 | A1 | 16 November 2023 |
| WO | 2022-025590 | A1 | 03 February 2022 | KR | 10-2022-0142529 | A | 21 October 2022 |
| | | | | KR | 10-2570074 | B1 | 24 August 2023 |
| | | | | US | 2023-0232415 | A1 | 20 July 2023 |
| WO | 2022-152271 | A1 | 21 July 2022 | CN | 114765879 | A | 19 July 2022 |
| | | | | EP | 4262307 | A1 | 18 October 2023 |
| | | | | KR | 10-2023-0122107 | A | 22 August 2023 |
| | | | | US | 2023-0362927 | A1 | 09 November 2023 |

Form PCT/ISA/210 (patent family annex) (July 2022)